(19) Europäisches Patentamt
European Patent Office
Office européen des brevets

(11) Numéro de publication: **0 151 088**
**B1**

(12) # FASCICULE DE BREVET EUROPÉEN

(45) Date de publication du fascicule du brevet: **29.03.89**

(51) Int. Cl.⁴: **B 31 F 1/28,** B 65 D 65/40

(21) Numéro de dépôt: **85810003.5**

(22) Date de dépôt: **10.01.85**

(54) **Procédé de préparation d'un matériau sandwich à ondulations intérieures de papier et protection extérieure par pellicule plastique.**

(30) Priorité: **12.01.84 FR 8400467**

(43) Date de publication de la demande: **07.08.85 Bulletin 85/32**

(45) Mention de la délivrance du brevet: **29.03.89 Bulletin 89/13**

(84) Etats contractants désignés: **AT BE CH DE FR GB IT LI LU NL SE**

(56) Documents cité:
**DE-A-1 931 887**
**DE-A-2 162 912**
**FR-A-1 203 593**
**FR-A-1 507 258**
**FR-A-2 027 462**
**FR-A-2 090 229**
**FR-A-2 202 785**
**FR-A-2 469 439**
**GB-A-209 144**
**GB-A-1 152 855**
**US-A-3 293 107**
**US-A-3 399 819**

(73) Titulaire: **I.T.I. Enterprises Limited, à Belfast (Irlande du Nord), succursale de Fribourg, 30 rue St- Pierre, CH- 1700 Fribourg (CH)**

(72) Inventeur: **Geoffroy- Dechaume, Vincent, 5 Enclos de l'Abbaye, F-78300 Poissy (FR)**
Inventeur: **De Capele, François, 10 Place des Vosges, F-75004 Paris (FR)**

(74) Mandataire: **Vuille, Roman, c/o KIRKER & Cie S.A. 14, rue du Mont- Blanc Case Postale 872, CH- 1211 Genève 1 (CH)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).



LIBER, STOCKHOLM 1989

## Description

L'invention concerne un procédé de préparation d'un matériau nouveau, essentiellement à base de papier, plus précisément un matériau sandwich à ondulations intérieures de papier et protection extérieure contre l'humidité par pellicule de plastique.

Le matériau sandwich issu du procédé de l'invention est un matériau comportant un bloc d'ondulations interne formé de feuilles de papier ondulé séparées l'une de l'autre par une feuille de papier intermédiaire. Ce bloc d'ondulation est compris entre deux feuilles de couverture protectrices composites, chacune d'entre elles étant recouverte, sur sa face externe d'une pellicule d'un composé thermoplastique, étanche à l'eau.

Pour des raisons qui seront développées plus loin, il est peu fréquent d'associer des pellicules de papier et une feuille d'un matériau thermoplastique pour constituer des matériaux sandwich nouveaux. On connaît cependant un type de feuille protectrice composite, formée d'une feuille de support en papier sur laquelle a été extrudée à chaud sur une face une pellicule d'un matériau thermoplastique, tel du polyéthylène ou du polypropylène. Ce type de feuille est utilisé notamment pour réaliser des emballages ou des couvertures, lorsqu'une feuille de papier doit être protégée de l'humidité. Bien entendu, selon le même principe, la feuille de papier peut être recouverte d'une pellicule de matériau thermoplastique sur ses deux faces.

Un second matériau sandwich comprend une pellicule de matériau thermoplastique prise en sandwich entre deux feuilles planes de papier. Ce matériau, appelé fréquemment "paratène", utilise plus spécialement les propriétés mécaniques de la pellicule intérieure de matériau thermoplastique.

On connaît par ailleurs le carton ondulé, un matériau exclusivement à base de papier et très largement utilisé.

Le carton ondulé est le plus généralement constitué par une âme centrale, une feuille de papier plissée en ondulations, pour former des cannelures. Sur chacun des côtés du bloc d'ondulations, est collée une feuille de papier de couverture. Dans un tel cas, on parle de carton ondulé double face.

On a tenté d'associer le matériau sandwich papier/thermoplastique susmentionné au carton ondulé pour en obtenir un matériau sandwich composite combinant les propriétés de chacun de ses conposants, notamment légèreté, rigidité et imperméabilité.

Le brevet FR-A-1 507 258 décrit un matériau comprenant deux feuilles lisses et une feuille ondulée centrale et deux pellicules de matière plastique, l'une sur la face externe d'une première feuille, l'autre sur la face interne de la seconde feuille. Cette seconde feuille de matière plastique, thermosoudable, sert en fait à souder l'une à l'autre la seconde feuille lisse et la feuille de carton ondulé.

Le brevet FR-A-1 203 593 décrit un type de matériau analogue, en particulier un carton ondulé comportant une feuille lisse de couverture, revêtue d'un film imperméable externe. Il s'agit cependant d'un carton ne comportant qu'un seul bloc d'ondulations et dont la feuille de couverture comporte en outre, sur sa face interne, le film plastique thermosoudable. Ce même brevet décrit encore un carton dit "double double" mais dépourvu de protection plastique externe et dont la feuille centrale comporte deux films thermosoudables qui sont thermosoudés aux cannelures des feuilles ondulées.

Le brevet US-A-3 293 107, finalement, décrit un procédé de fabrication de carton ondulé du type dit "double double" qui ne fait pas appel à l'emploi de films thermosoudables mais uniquement de colles, pour l'assemblage des feuilles de papier ondulé aux feuilles lisses tant de couverture qu'intermédiaires. Un tel matériau, qui présente des propriétés mécaniques remarquables, est cependant dépourvu de protection plastique extérieure. Les étapes de réalisation d'un tel matériau peuvent être schématiquement définies comme suit:

- chacune des feuilles de couverture protectrice composite est obtenue par assemblage d'une première et d'une seconde feuille de papier,
- une première feuille de papier ondulé est collée par les crêtes de ses cannelures à la partie interne de la première feuille de couverture pour donner un premier ruban de carton ondulé simple face,
- une seconde feuille de papier ondulé est collée par les arêtes de ses cannelures à une feuille de papier intermédiaire, pour donner un second ruban de carton ondulé simple face,
- la seconde feuille de couverture est collée par sa partie interne aux crêtes libres des cannelures du second ruban de carton ondulé pour donner un ruban de carton ondulé double face, puis
- le ruban de carton ondulé double face est collé aux crêtes libres des cannelures du premier ruban de carton ondulé simple face, par l'entremise de la feuille de papier intermédiaire.

De manière usuelle, dans un tel procédé, on utilise une solution de colle à polymérisation endothermique pour assembler les crêtes de la feuille d'ondulations avec le ruban de couverture. Les colles les plus couramment utilisées sont constituées par une solution aqueuse d'amidon. Dans ce cas, la phase aqueuse fait ouvrir les pores de chacune des deux feuilles de papier en contact. La liaison entre les deux feuilles nécessite un apport de chaleur pour faire éclater le grain d'amidon. A cet effet, le système d'ondulations comporte des éléments chauffants permettant d'assurer la montée en température des deux feuilles de papier au cours de leur mise en contact et ultérieurement ces éléments chauffants peuvent être constitués soit par des moyens de pression, notamment les rouleaux, portés à haute température, soit encore par des tables chauffantes placées sur le parcours du carton ondulé.

Pour un matériau sandwich à base de papier comportant un bloc interne d'ondulations formé de deux feuilles de papier ondulé solidaires l'une de l'autre par l'entremise d'une feuille de papier intermédiaire, compris entre deux feuilles de couverture composites formées elles-mêmes d'une première feuille, interne et d'une seconde feuille, externe, et résistant à l'humidité par protection plastique extérieure, il pourrait être envisagé d'utiliser des rubans de couverture constitués par une pellicule d'un plastique thermodurcissable et de leur appliquer le processus de fabrication ci-dessus. Mais l'usage montre qu'il est très difficile industriellement d'assembler une feuille de papier ondulé et une pellicule d'un matériau de plastique thermodurcissable

On conçoit également aisément qu'il est impossible d'appliquer le processus de fabrication du carton ondulé à un ruban de couverture constitué par une pellicule d'un matériau thermoplastique. En effet, ce procédé nécessite l'utilisation d'une solution de colle thermodurcissable imposant de réchauffer les deux feuilles à réunir à une température de près de 200° C, notamment pour faire éclater le grain d'amidon. Or, les matériaux thermoplastiques, tels notamment le polyéthylène et le polypropylène, ont une température de fusion respectivement de 80° C et de 120° C.

La présente invention a pour but de remédier à ces inconvénients.

L' invention telle qu'elle est caractérisée dans les revendications, résoud le problème consistant à fabriquer un matériau sandwich dont l'âme centrale est en carton ondulé, à plusieurs épaisseurs, protégée sur ses deux faces par une pellicule de matériau thermoplastique.

Les avantages obtenus grâce à cette invention consistent essentiellement en ce que l'âme interne de carton ondulé est protégée de l'humidité et des agressions extérieures par un matériau de couverture imputrescible. Ce matériau, présentant par ailleurs une plus grande noblesse, permet d'obtenir un aspect extérieur et un état de surface très agréables à la vue et au toucher, ainsi qu'une grande variété de couleurs.

Un autre avantage de l'invention est que le matériau sandwich peut être réalisé à très bas prix, et en très grande quantité, grâce aux dispositifs existants pour réaliser du carton ondulé.

Il est recommandé d'utiliser ce matériau dans de nombreux domaines où le carton est rarement présent. En particulier, les demandeurs ont développé, depuis plusieurs années, des meubles en carton ondulé. La difficulté était de donner a ce carton à la fois de la rigidité pour supporter les efforts du meuble et une résistance à l'humidité.

Suite à de nombreuses études effectuées en collaboration avec des groupes cartonniers et des centres de recherches, les demandeurs étaient parvenus à réaliser des feuilles de carton suffisamment résistantes pour constituer des meubles susceptibles de supporter des charges de près de 400 kg. La formule consistait a introduire à l'intérieur des pores de la pâte à papier des résines d'urée-formol solubles. Par contre, la tenue à l'humidité de ces matériaux et l'aspect extérieur ne se sont pas avérés totalement satisfaisants.

L'invention a permis de résoudre ce problème et de réaliser des meubles en matériau sandwich de carton-propylène extrêmement résistants et d'un aspect extérieur beaucoup plus agréable.

Elle a plus précisément pour objet un procédé de fabrication d'un matériau sandwich tel que défini plus haut, dans lequel

- chacune des feuilles de couverture est obtenue par assemblage des première et seconde feuilles susmentionnées,
- dans une première zone de collage, la première feuille de couverture composite est maintenue sous tension grâce à des cylindres tenseurs, et, une première feuille de papier ondulé est collée et, sous l'action de cylindres presseurs, est plaquée par les crêtes de ses cannelures à la partie interne de la première feuille de couverture composite, pour former ainsi un premier ruban de carton ondulé simple face
- dans une seconde zone de collage, une seconde feuille de papier ondulé est collée et plaquée sous contrainte contre la partie interne de la feuille de papier intermédiaire pour former un second ruban de carton ondulé simple face,
- dans une troisième zone de collage, la seconde feuille de couverture est collée par sa partie interne aux crêtes libres des cannelures du second ruban de carton ondulé pour former un ruban de carton ondulé double face, et
- dans une quatrième zone de collage, le premier ruban de carton ondulé simple face est collé par les crêtes libres de ses cannelures à la partie libre de la feuille de papier intermédiaire (71) du ruban de carton ondulé double face, puis ces deux rubans (procédé connu de US-A-3 293 107) sont réunis à plat,

caractérisé en ce qu'il consiste

A) - à réaliser la première feuille de couverture composite protectrice en extrudant une pellicule d'un composé thermoplastique sur la partie extérieure d'une première feuille de papier, puis à déplacer en translation ledit ruban face à la première zone de collage,

- à déposer dans la première zone de collage une solution de colle à mise en oeuvre à froid et prise immédiate sur les crêtes longitudinales des cannelures d'un côté de la première feuille de papier ondulé,

à maintenir les cylindres tenseurs et presseurs de la première zone de collage à une température inférieure à la température de fusion du composé thermoplastique extrudé,

pour obtenir le premier ruban de carton ondulé simple face;

B) - à réaliser simultanément le second ruban de carton ondulé simple face en déposant, dans la seconde zone de collage une solution de colle thermodurcissable à polymérisation endothermique sur les crêtes des cannelures d'un côté d'une seconde feuille de papier ondulé,

- à faire subir au deuxième ruban de carton ondulé, après sa formation dans la deuxième zone de collage, un chauffage par l'intermédiaire de cylindres chauffants portés à haute température;

C) - à assembler la seconde feuille de couverture composite protectrice constituée d'une pellicule d'un composé thermoplastique extrudé sur la partie externe d'une seconde feuille de papier, au second ruban de carton ondulé simple face,

- en déposant dans la troisième zone de collage une solution de colle à mise en oeuvre à froid et prise immédiate sur les crêtes libres des cannelures du ruban
- et en plaquant grâce à des cylindres presseurs maintenus à une température inférieure à la température d fusion du composé thermoplastique extrudé, la partie interne de la seconde feuille de couverture composite contre le côté encollé du ruban pour obtenir un ruban de carton ondulé double face;

et

D) - à assembler le premier ruban de carton ondulé simple faceet le ruban de carton ondulé double face résultant des étapes A et C ci-dessus,

- en déposant dans la quatrième zone de collage une solution de colle thermodurcissable à polymérisation endothermique sur les crêtes libres des cannelures du ruban,
- après placage et réunion à plat du premier ruban de carton ondulé simple face et du ruban de carton ondulé double face, à faire passer le matériau sandwich résultant face à des tables chauffantes en contact avec les pellicules de composé thermoplastique extrudé et maintenues à une température inférieure à la température de fusion du composé thermoplastique extrudé.

L'invention va maintenant être exposée plus en détail à l'aide de dessins représentant un mode d'exécution.

Sur ces dessins:

- la figure 1 schématise la réalisation d'un ruban de carton ondulé, résistant à l'humidité par protection plastique simple face;
- la figure 2 représente, en coupe et en perspective, la feuille de protection à paroi extérieures en matériau thermoplastique protégeant le matériau sandwich;
- la figure 3 représente, en perspective et en coupe, une portion de matériau sandwich à protection simple face réalisée selon le procédé de la figure 1;
- la figure 4 schématise le procédé de fabrication permettant de réaliser des matériaux sandwich à âme centrale en carton ondulé multicouches, protégée sur ses deux faces par une pellicule de matérlau thermoplastique;
- la figure 5 représente, également en perspective, une portion d'un matériau sandwich double couche, double face protectrice, réalisé selon le procédé de la figure 4.

Si l'on se réfère à la figure 1, on reconnaît le principe classique d'une onduleuse (25).

Le procédé selon l'invention consiste tout d'abord à réaliser un premier ruban (27) de couverture composite protectrice (28) en extrudant une pellicule (29) d'un composé thermoplastique, tel du polyéthylène, sur la partie extérieure (30) d'une première feuille de papier (31). Le produit obtenu apparaît en coupe figure 2.

Par une traction selon (f) sur le ruban de couverture (27), on déplace en translation le ruban de couverture face à une première zone de collage (32).

Par ailleurs, selon la méthode usuelle d'utilisation d'une onduleuse on déroule un second ruban (33) de papier d'âme (34). On introduit ce ruban de papier d'âme entre les mâchoires de deux rouleaux crantés (36, 37). Pour maintenir le premier ruban (27) de couverture dans la zone de collage (32), on utilise des moyens de maintien (38), essentiellement constitués par deux cylindres tenseurs (40, 41) alternés par rapport au ruban de couverture (27).

Après son passage entre les mâchoires des rouleaux crantés (36, 37), le second ruban (33) est transformé en une feuille (42) de papier ondulé (44). On fait passer le côté (45) de la feuille (42) de papier ondulé à l'intérieur d'un système encolleur (47) pour déposer une solution de colle (48) sur les crêtes longitudinales (49) du côté (45) de la feuille (42) de papier ondulé (44). Puis, on dirige la feuille de papier ondulé (44) vers la zone de collage (32) en amenant le second côté (45) de la feuille (42) en regard de la partie interne (50) du premier ruban de couverture (27). On fait déplacer la feuille (42) de papier ondulé (44) et le premier ruban de couverture (27) face à face à la même vitesse.

On fait passer la feuille (42) de papier ondulé (44) en-dessous d'un cylindre presseur (41), entre le second rouleau de tension (41) et le premier ruban de couverture (27), de façon à plaquer sous contrainte le second côté (45) de la feuille (42) de papier ondulé (44) contre la partie interne (50) du premier ruban de couverture (27).

Selon le procédé de l'invention, le système encolleur utilise une solution de colle (48) de couverture à mise en oeuvre à froid et prise immédiate. Par ailleurs, on donne aux moyens de maintien (38) et de pression, tels les cylindres tenseurs (40, 41), une température inférieure à la température de fusion du composé thermoplastique extrudé sur la partie extérieure (30) de la feuille de papier (31). Plus simplement, et contrairement aux usages usuels des onduleuses utilisées pour la réalisation de carton ondulé, on rend inactifs les moyens de chauffage des cylindres (40, 41).

On comprendra que ceci permet:

- d'une part, de ne pas faire fondre la pellicule (29) de composé thermoplastique,
- et, d'autre part, de permettre le placage du premier ruban de couverture (27) sur la feuille (42) de papier ondulé (44).

La vitesse de déplacement, dans la zone de collage, atteint 80 à 120 mètres par minute sur une distance de collage d'environ 10 cm. C'est la raison pour laquelle il est nécessaire d'utiliser une colle (48) à mise en oeuvre à froid et prise quasi immédiate.

Il est recommandé par l'invention d'utiliser préférentiellement une colle à deux éléments actifs séparés,

- le premier assurant un contact et une prise immédiate entre les crêtes de cannelures du second côté (45) de la feuille (42) de papier ondulé (44) et le premier ruban de couverture (27),
- le second assurant une consolidation ultérieure de la liaison par polymérisation adiabatique.

Le matériau sandwich (55) en feuilles, réalisé selon le procédé de la figure 1, est décrit figure 3.

On constate que d'une part, le premier côté (56) de la feuille (42) de papier ondulé (44) est libre, et laisse apparaître les cannelures (57) et que, d'autre part, le matériau sandwich (55) est recouvert par une pellicule (29) d'un matériau thermoplastique posé à plat sur les cannelures (57) du second côté (45) de la feuille (42) de papier ondulé (44).

Plus précisément, le matériau sandwich (55) comporte de bas en haut une feuille (42) de papier ondulé (44) en une couche ménageant des cannelures (57) apparaissant libres sur la première face du matériau, une feuille (31) quasi plane de papier intermédiaire, recouvrant à plat le second côté (45) de la feuille (42) de papier ondulé (44), et dont la partie intérieure (50) est collée sur les crêtes longitudinales (49) des cannelures (57) de ce second côté (45); enfin, une pellicule (29) d'un composé thermoplastique, tel du polyéthylène, adhérant physiquement aux pores de la partie externe de la feuille de papier intermédiaire (31) à la suite d'une extrusion.

Après configuration selon le procédé de la figure 1, le matériau sandwich (55) à simple face protectrice est traité selon le procédé complémentaire de la figure 4, pour augmenter le nombre de ses couches d'ondulations internes pour aboutir au matériau (61) de la figure 5.

Pour fabriquer un matériau sandwich multicouches, il convient de réaliser tout d'abord une série de rubans (64) de carton ondulé classique selon la méthode générale décrite au préambule de la présente demande. Le principe général de réalisation des cannelures (66) sur le ruban de papier d'âme (65), pour constituer une feuille d'âme cannelée (67), est le même que celui décrit à la figure 1. Par contre, on utilisera de préférence des solutions secondaires de colle (70), thermodurcissables à polymérisation endothermique. En effet, le premier ruban (27) de couverture protectrice étant remplacé par un simple ruban de papier intermédiaire (71), le problème de la détérioration de la pellicule de matière thermoplastique ne se pose plus. On a donc intérêt à favoriser la liaison mécanique par collage entre les cannelures transversales (66) de l'âme interne (67) et le ruban de papier intermédiaire (71).

On peut également concevoir que les divers blocs d'ondulations constitués par la série (64) de rubans de carton ondulé soient réunis pour former un bloc multicouches. Pour ce faire, les divers rubans (64) de carton ondulé seront réunis entre eux selon la méthode classique en déposant une troisième solution de colle sur les crêtes longitudinales (72) des cannelures du côté libre (73) de chaque ruban (64) de carton ondulé. A l'aide de moyens de pression, le premier côté cannelé (73) d'un premier bloc d'ondulations sera plaqué contre la paroi externe de la feuille de papier intermédiaire du ruban de carton ondulé adjacent.

Pour réaliser ces blocs multicouches, on utilisera une troisième solution de colle, également à polymérisation endothermique, et on fera subir aux divers rubans (64) de carton ondulé, après collage, une étape de chauffage, notamment en chauffant les moyens de pression permettant de les plaquer l'un contre l'autre.

Pour fabriquer un matériau sandwich à blocs (75) d'ondulations multicouches, tels que décrits figure 5, on utilise d'une part un ruban (76) de matériau sandwich (55) à protection plastique simple face, constitué selon le procédé de la figure 1 par assemblage d'un ruban de couverture (27) avec une première feuille (42) de papier ondulé (44) et, d'autre part, d'un bloc d'ondulations cartonné multicouches, tel que décrit précédemment. On procède tel que décrit sur la zone (A) de la figure 4. On réunit à plat la première face interne (80) du matériau sandwich (55) sur laquelle apparaissent les cannelures (57) avec la partie libre (81) d'une feuille de papier intermédiaire externe d'un bloc d'ondulations (64). On utilise, pour ce faire, une quatrième solution de colle (82), placée entre la crête des canelures (57) du matériau sandwich (55) et la feuille de papier intermédiaire (81).

De préférence, il est recommandé par l'invention d'utiliser une quatrième solution de colle (82), thermodurcissable à polymérisation endothermique. Après placage du matériau sandwich (55), simple face, sur le bloc d'ondulations (64), on soumet l'ensemble à un flux de chaleur (F) fourni notamment par des tables chauffantes (85, 86). On remarque que le flux de chaleur (F) est dirigé de l'extérieur sur le bloc d'ondulations (64) de façon à ce qu'au moins la première feuille (42) de papier ondulé (44) du matériau sandwich (55), et éventuellement les canelures complémentaires (72) du bloc d'ondulations (64), protègent du flux de chaleur (F) la pellicule (29) de matériau thermoplastique.

Pour fabriquer un matériau sandwich à protection plastique double face, on procède ainsi que cela apparaît dans la zone (B) de la figure 4.

Tout d'abord, on réalise un second ruban de couverture (27') constitué par une seconde pellicule (29') d'un composé thermoplastique extrudé sur la partie extérieure d'une seconde feuille de papier intermédiaire (44'). On dépose une quatrième solution de colle (90) sur les cannelures libres (72) de la première face d'un matériau sandwich (55), soit simple couche comme réalisé selon le procédé de la figure 1, soit multicouches est réalisé tel que représenté figure 4 (A).

On plaque, grâce à des cylindres presseurs (92), la partie interne du second ruban (27') de couverture contre les crêtes de cannelures (72) de la première face du matériau sandwich (55). De même que pour mettre en oeuvre le procédé de la figure 1, on utilise une quatrième solution de colle (90) à mise en oeuvre à froid et prise immédiate. Afin de ne pas détruire la pellicule de matériau thermoplastique (29'), par fusion, on maintient à faible température les divers appareils, tels que les cylindres presseurs (92) et les tables chauffantes (85, 86) situées sur le parcours du second ruban de couverture (27') après assemblage.

On comprendra que la rigidité accrue d'un matériau sandwich simple face (64) permet éventuellement de le coller sur un second ruban protecteur (27') dans des conditions beaucoup plus aisées. C'est la raison pour laquelle on pourra éventuellement réaliser un premier matériau sandwich simple face protectrice à l'aide d'une colle du type instantané à froid et lui adjoindre un second ruban protecteur par un collage endothermique (92).

Au cours de la réalisation des matériaux sandwich (55, 60, 61), on est amené à maintenir sous tension les rubans de couverture (27, 27') à l'aide de moyens de tension, tels des cylindres (40, 92) et à faire passer ces mêmes matériaux sandwich face à divers moyens chauffants; telles les tables chauffantes (85, 86). Ces divers systèmes peuvent fréquemment entrer en contact avec la pellicule (29, 29') de matériau thermoplastique.

Une variante avantageuse de l'invention consiste à recouvrir les cylindres (40, 92), moyens chauffants (85, 86), et plus généralement tous matériaux métalliques sur le chemin du ruban de couverture (27, 27'), à l'aide d'un matériau souple (95) pour prémunir des rayures la pellicule thermoplastique (29, 29'). Cette variante est facilitée par le fait que, selon l'invention, on ne soumet pas ces divers éléments à une source de chaleur.

Il convient de noter également que les postes de collage (47), representé la fig. 1, et (70), representé à fig. 4, peuvent fonctionner à froid ou à une température moyennement élevée, par exemple de l'ordre de 40° C. Les rouleaux crénelés (36) et (37), respectivement (47) sont alors chauffés, mais les rouleaux (40) au contact du polyéthyléne sont froids, les autres postes de collage fonctionnant obligatoirement à froid.

Les colles à froid que l'on peut utiliser dans le procédé de la présente invention sont des colles du commerce. On peut également utiliser des colles à base d'amidon dans lesquelles on ajoute des produits tels que la soude par exemple, afin d'abaisser la température d'éclatement de l'amidon de 80 à 40° C. De telles colles se trouvent dans le commerce spécialisé.

## Revendications

1. Procédé de préparation d'un matériau sandwich à base de papier comportant un bloc interne d'ondulations (75) formé de deux feuilles de papier ondulé (42, 67) solidaires l'une de l'autre par l'entremise d'une feuille de papier intermédiaire (71), compris entre deux feuilles de couverture composites (27, 27') formées elles-mêmes d'une première feuille (31), interne et d'une seconde feuille (29), externe, dans lequel

- chacune des feuilles de couverture (27, 27') est obtenue par assemblage des première et seconde feuilles susmentionnées,
- dans une première zone de collage (32), la première feuille de couverture composite (27) est maintenue sous tension grâce à des cylindres tenseurs (40), et, une première feuille (42) de papier ondulé est collée et, sous l'action de cylindres presseurs (38, 41), est plaquée par les crêtes de ses cannelures à la partie interne (50) de la première feuille de couverture composite (27), pour former ainsi un premier ruban de carton ondulé simple face (55),
- dans une seconde zone de collage (70), une seconde feuille de papier ondulé (67) est collée et plaquée sous contrainte contre la partie interne de la feuille de papier intermédiaire (71) pour former un second ruban de carton ondulé simple face (64),
- dans une troisième zone de collage (90), la seconde feuille (27') de couverture est collée par sa partie interne aux crêtes libres des cannelures du second ruban de carton ondulé pour former un ruban de carton ondulé double face (55'), et
- dans une quatrième zone de collage (82), le premier ruban de carton ondulé simple face (55) est collé par les crêtes libres de ses cannelures à la partie libre (81) de la feuille de papier intermédiaire (71) du ruban de carton ondulé double face (55'), puis ces deux rubans (55, 55') sont réunis à plat,

caractérisé en ce qu' il consiste

A) - à réaliser la première feuille (27) de couverture composite protectrice (28) en extrudant une pellicule (29) d'un composé thermoplastique sur la partie extérieure (30) d'une première feuille de papier (31), puis à déplacer en translation ledit ruban face à la première zone de collage (32),
- à déposer dans la première zone de collage (32) une solution de colle à mise en oeuvre à froid et prise immédiate (48) sur les crêtes longitudinales des cannelures d'un côté (45) de la première feuille de papier ondulé (44),
- à maintenir les cylindres tenseurs et presseurs (38, 40, 41) de la première zone de collage (32) à une température inférieure à la température de fusion du composé thermoplastique extrudé, pour obtenir le premier ruban de carton ondulé simple face (55);

B) - à réaliser simultanément le second ruban de carton ondulé simple face (64) en déposant, dans la seconde zone de collage (70) une solution de colle thermodurcissable à polymérisation endothermique sur les crêtes des cannelures (66) d'un côté d'une seconde feuille de papier ondulé (67),
- à faire subir au deuxième ruban de carton ondulé (64), après sa formation dans la deuxième zone de collage (70), un chauffage par l'intermédiaire de cylindres chauffants portés à haute température;

C) - à assembler la seconde feuille de couverture composite protectrice (27') constituée d'une pellicule d'un composé thermoplastique extrudé sur la partie externe d'une seconde feuille de papier (31'), au second ruban de carton ondulé simple face (64),
- en déposant dans la troisième zone de collage (90) une solution de colle à mise en oeuvre à froid et prise immédiate sur les crêtes libres des cannelures du ruban (64)
- et en plaquant grâce à des cylindres presseurs (92) maintenus à une température inférieure à la température de fusion du composé thermoplastique extrudé, la partie interne de la seconde feuille de couverture composite (27') contre le côté encollé du ruban (64) pour obtenir un ruban de carton ondulé double face (55');

et

D) - à assembler le premier ruban de carton ondulé simple face (55) et le ruban de carton ondulé double face (55') résultant des étapes A et c ci-dessus,
- en déposant dans la quatrième zone de collage (82) une solution de colle thermodurcissable à polymérisation endothermique sur les crêtes libres des cannelures (57) du ruban (55),
- après placage et réunion à plat du premier ruban de carton ondulé simple face (55) et du ruban de carton ondulé double face (55'), à faire passer le matériau sandwich résultant face à des tables chauffantes (85, 86) en contact avec les pellicules de composé thermoplastique extrudé (29, 29') et maintenues à une température inférieure à la température de fusion du composé thermoplastique extrudé.

2. Procédé selon la revendication 1, caractérisé en ce que les cylindres tenseurs, respectivement presseurs (40, 41, 92) et les tables chauffantes (85, 86), en contact avec la pellicule de composé thermoplastique extrudé (29, 29'), sont recouverts d'un matériau souple de protection (95) pour prémunir des rayures ladite pellicule.

**Patentansprüche**

1. Verfahren zur Herstellung eines sandwichartig aufgebauten Materials auf Papierbasis, das aus einem gewellten Innenblock (75) besteht, der aus zwei Wellpapierbogen (42, 67) gebildet ist, die miteinander fest verbunden sind durch einen dazwischen liegenden Zwischenpapierbogen (71), wobei der Block zwischen zwei Bogen einer Verbundabdeckung (27, 27') angeordnet ist, die selbst wieder aus einem inneren ersten Bogen (31) und aus einem zweiten, äusseren Bogen (29) gebildet ist, und wobei in diesem Verfahren
- jeder Adeckbogen (27,27') durch Verbinden besagten ersten und zweiten Bogens erhalten wird,
- in einer ersten Klebezone (32), der erste Verbundabdeckbogen (27) mit Hilfe von Spannwalzen (40) unter Spannung gehalten wird, und ein erster Wellpapierbogen (42) geklebt wird und, unter Einwirkung von Druckzylindern (38, 41), aufplattiert wird mit seinen Wellenbergen an die Innenseite (50) des ersten Verbundabdeckbogens (27), um dadurch ein erstes einseitiges Wellkartonband (55) zu bilden,
- in einer zweiten Kleberzone (70), ein zweiter Wellpapierbogen (67) unter Spannung auf die Innenseite des Zwischenpapierbogens (71) aufgeklebt und aufplattiert wird, um ein zweites einseitiges Wellkartonband (64) zu bilden,
- in einer dritten Klebezone (90), der zweite Verbundabdeckbogen (27') mit seiner Innenseite auf die freiliegenden Wellenberge des zweiten Wellkartonbandes aufgeklebt wird, um ein zweiseitiges Wellkartonband (55') zu bilden, und
- in einer vierten Klebezone (82), das erste einseitige Wellkartonband (55) mit seinen freiliegenden Wellenbergen auf den freiliegenden Teil (81) des Zwischenpapierbogens (71) des zweiseitigen Wellkartonbandes (55') geklebt wird, und dann diese beiden Bänder (55, 55') plano miteinander verbunden werden,

dadurch gekennzeichnet, dass das Verfahren darin besteht, dass

A) - der erste Verbundabdeckbogen (27) für den Schutz (28) hergestellt wird durch Extrudieren einer Folie (29) einer thermoplastischen Verbindung auf die Aussenseite (30) eines ersten Papierbogens (31), und dann besagtes Band translatorisch zur ersten Klebezone (32) verschoben wird,
- in einer ersten Klebezone (32) eine kalt verarbeitbare Klebelösung niedergeschlagen wird und sofort (48) auf die Längswellenberge (45) des ersten Wellpapierbogens (44) aufgetragen wird,
- die Spann- und Druckwalzen (38, 40, 41) der ersten Klebezone (32) auf einer unter der Schmelztemperatur der extrudierten, thermoplastischen Verbindung liegenden Temperatur gehalten werden, um ein erstes einseitiges Wellkartonband (55) zu erhalten;

B) - gleichzeitig das zweite, einseitige Wellkartonband (64) dadurch hergestellt wird, dass in der zweiten Klebezone (70) eine in der Wärme durch endotherme Polymerisation aushärtende Klebelösung auf den Wellenbergen (66) einer Seite eines zweiten Wellpapierbogens (67) aufgetragen wird,
- das zweite Wellkartonband (64), nach seiner Bildung in der zweiten Klebezone (70) mit Hilfe von Heizwalzen hoher Temperatur erwärmt wird;

C) - der zweite schützende Verbundabdeckbogen (27'), bestehend aus einer extrudierten Folie einer thermoplastischen Verbindung auf der Aussenseite eines zweiten Papierbogens (31'), auf das zweite, einseitige Wellkartonband (64) aufgebracht wird,
- in der dritten Klebezone (90) eine kalt verarbeitbare Klebelösung niedergeschlagen wird und sofort auf die freiliegenden Wellenberge des Bandes (64) aufgetragen wird,
- und mit Hilfe der Druckwalzen (92), die auf einer unter der Schmelztemperatur der extrudierten, thermoplastischen Verbindung liegenden Temperatur gehalten werden, die Innenseite des zweiten Verbundabdeckbogens (27') auf die Klebeseite des Bandes (64) aufplattiert wird, um ein zweiseitiges Wellkartonband (55') zu erhalten; und

D) - das erste einseitige Wellkartonband (55) und das doppelseitige Wellkartonband (55'), die in den obigen Schritten A und C erhalten wurden, miteinander verbunden werden;
- in der vierten Klebezone (82) eine in der Wärme durch endotherme Polymerisation aushärtende Klebelösung auf den Wellenbergen (57) des Bandes (55) aufgetragen wird,
- nach Plattieren und Platoverbinden des einseitigen Wellkartonbandes (55) und des zweiseitigen Wellkartonbandes (55'), das dadurch gefertigte sandwichartige Material an Heiztischen (85, 86) vorbeilaufen gelassen wird in Kontakt mit den extrudierten Folien der thermoplastischen Verbindung (29, 29') und auf einer unter der Schmelztemepratur der extrudierten, thermoplastischen Verbindung liegenden Temperatur gehalten wird.

2. Verfahren nach Patentanspruch 1, dadurch gekennzeichnet, dass die in Kontakt mit der extrudierten Folie einer thermoplastischen Verbindung (29, 29') befindlichen Spannwalzen beziehungsweise Druckwalzen (40, 41, 92) und die Heiztische (85, 86), mit einem weichen Schutzmaterial (95) überzogen sind, um die Wellentäler besagter Folie vorauszubilden.

**Claims**

1. A process for the preparation of a paper-based sandwich material comprising an internal block of corrugations (75) which is formed of two sheets of corrugated paper (42, 67) joined together by the interposition of an intermediate sheet of paper (71), the said internal block being enclosed between two composite covering sheets (27, 27') which are themselves formed of a first, inner sheet (31) and a second, outer sheet (29), in which process:
- each of the covering sheets (27, 27') is obtained by combining the first and second sheets mentioned above,
- in a first glueing zone (32), the first composite covering sheet (27) is kept under tension by means of tension rollers (40) and a first sheet of corrugated paper (42) is glued and, under the action of pressure rollers (38, 41), is pressed by the ridges of its fluting against the inner part (50) of the first composite covering sheet (27), thereby forming a first strip of single-sided corrugated cardboard (55),
- in a second glueing zone (70), a second sheet of corrugated paper (67) is glued and pressed under stress against the inner part of the intermediate sheet of paper (71), thereby forming a second strip of single-sided corrugated cardboard (64),
- in a third glueing zone (90), the second covering sheet (27') is glued by its inner part to the free ridges of the fluting of the second strip of corrugated cardboard, thereby forming a strip of double-sided corrugated cardboard (55'), and
- in a fourth glueing zone (82), the first strip of single-sided corrugated cardboard (55) is glued by the free ridges of its fluting to the free part (81) of the intermediate sheet of paper (71) of the strip of double-sided corrugated cardboard (55'), after which these two strips (55, 55') are brought together flat, characterized in that it consists in:

A) - producing the first sheet (27) of the protective composite covering (28) by extruding a film (29) of a thermoplastic compound onto the outer part (30) of a first sheet of paper (31) and then displacing the said strip, by translational motion, facing the first glueing zone (32),
- depositing, in the first glueing zone (32), a solution of instant-setting cold-bonding glue (48) on the longitudinal ridges of the fluting on one side (45) of the first sheet of corrugated paper (44), and
- keeping the tension and pressure rollers (38, 40, 41) of the first glueing zone (32) at a temperature below the melting point of the extruded thermoplastic compound, so as to form the first strip of single-sided corrugated cardboard (55);

B) - simultaneously producing the second strip of single-sided corrugated cardboard (64) by depositing, in the second glueing zone (70), a solution of thermosetting glue, with endothermic polymerization, on the ridges of the fluting (66) on one side of a second sheet of corrugated paper (67), and

- heating the second strip of corrugated cardboard (64) by means of heated rollers at high temperature, after the formation of the said second strip in the second glueing zone (70);

C) - combining the second protective composite covering sheet (27'), consisting of a film of a thermoplastic compound extruded onto the outer part of a second sheet of paper (31'), with the second strip of single-sided corrugated cardboard (64),

- depositing, in the third glueing zone (90), a solution of instant-setting cold-bonding glue on the free ridges of the fluting of the strip (64), and
- by means of pressure rollers (92) kept at a temperature below the melting point of the extruded thermoplastic compound, pressing the inner part of the second composite covering sheet (27') against that side of the strip (64) which is coated with glue, so as to form a strip of double-sided corrugated cardboard (55');

and

D) - combining the first strip of single-sided corrugated cardboard (55) with the strip of doublesided corrugated cardboard (55') resulting from steps A and C above,

- depositing, in the fourth glueing zone (82), a solution of thermosetting glue, with endothermic polymerization, on the free ridges of the fluting (57) of the strip (55), and
- after the first strip of single-sided corrugated cardboard (55) and the strip of double-sided corrugated cardboard (55') have been pressed and brought together flat, passing the resulting sandwich material face-down over heated tables (85, 86) which are in contact with the films of extruded thermoplastic compound (29, 29') and kept at a temperature below the melting point of the extruded thermoplastic compound.

2. The process according to claim 1, characterized in that the tension and pressure rollers (40, 41, 92) and the heated tables (85, 86), which are in contact with the film of extruded thermoplastic compound (29, 29'), are covered with a flexible protective material (95) to prevent the said film from being scratched.

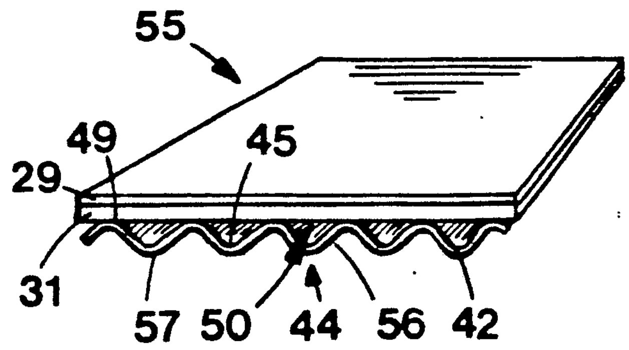


FIG. 3

FIG. 1

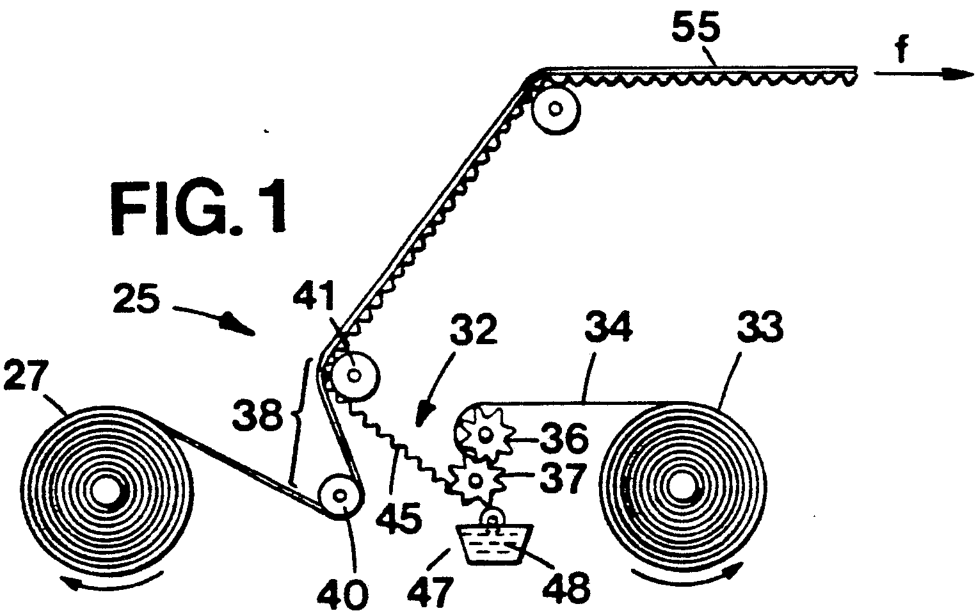


FIG. 2

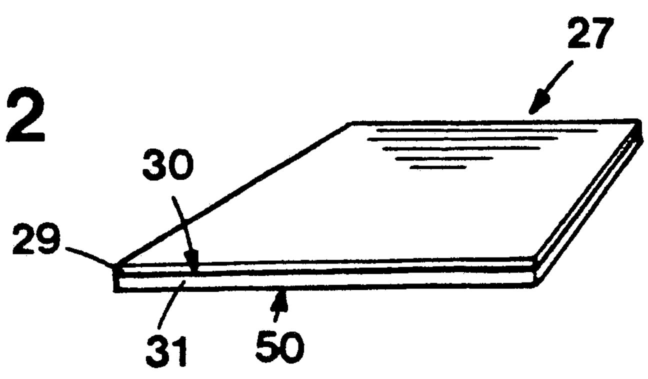

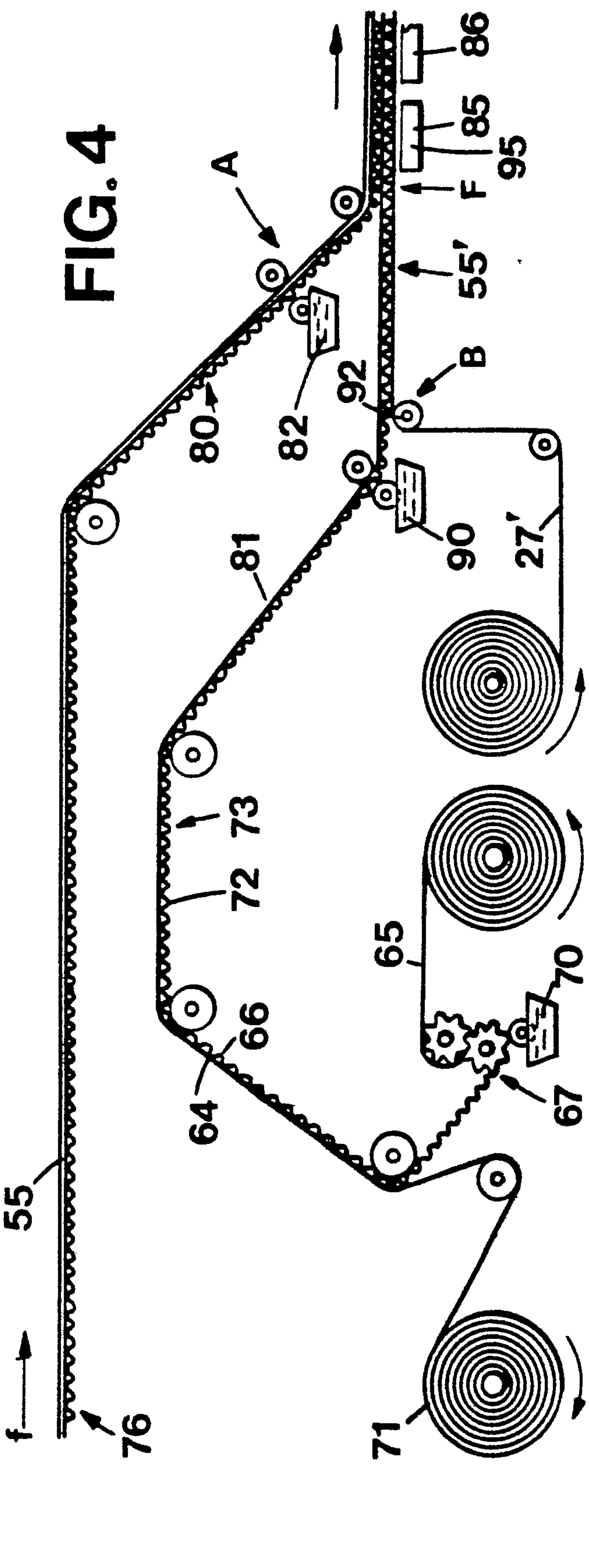
A
80
82
92
B
55'
F
95
85
86
81
90
27'
73
72
65
70
66
64
67
55
76
71
FIG. 4

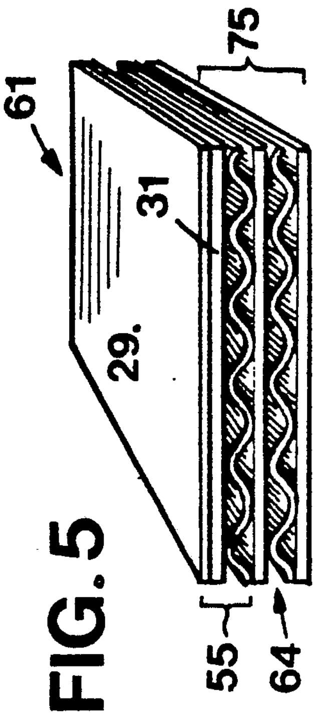
61
75
31
29.
55
64
FIG. 5